# EUROPÄISCHE PATENTANMELDUNG

(11) **EP 4 383 500 A2**
(43) Veröffentlichungstag der Anmeldung: **12.06.2024**
(21) Anmeldenummer: 23214340.4
(22) Anmeldetag: 05.12.2023
(51) Int. Cl.: H02J 3/24, H02J 3/32, H02J 3/48

(54) **ERBRINGUNG VON SEKUNDÄRER REGELLEISTUNG DURCH EIN KOMBINATIONSKRAFTWERK MIT EINEM BATTERIESPEICHER UND EINEM PUMPSPEICHERKRAFTWERK**

(30) Priorität: 08.12.2022 DE 102022132667
(71) Anmelder: RWE Supply & Trading GmbH, 45141 Essen (DE)
(72) Erfinder: Spiecker, Dr. Stephan, 45141 Essen (DE); Schwarz, Dr. Hans-Günter, 45141 Essen (DE); Wannenwetsch, Dr. Jens, 45141 Essen (DE)
(74) Vertreter: Schwenderling, Jens

(57) **Zusammenfassung**

Das hier vorgestellte Verfahren zur Bereitstellung von positiver beziehungsweise negativer sekundärer Regelleistung 11 zur Regelung der Frequenz eines Wechselspannungsnetzes 4 im Falle einer Unterfrequenz beziehungsweise Überfrequenz beruht auf der Bereitstellung der sekundären Regelleistung 11 zunächst über die Leistungsbereitstellung 12 eines Batteriespeichers 2 bei gleichzeitigem oder verzögertem Anfahren eines Pumpspeicherkraftwerks 3 von einer Nullleistung auf eine positive beziehungsweise negative Leistung. Für den Fall, dass der Batteriespeicher nur bei der Regelleistungserbringung unterstützt, gibt das Pumpspeicherkraftwerk 3 dabei die der Leistungsbereitstellung 13 entsprechende positive beziehungsweise negative Leistung in das Wechselspannungsnetz 4 ab.

## Beschreibung

Gegenstand der vorliegenden Erfindung ist ein Verfahren zur Erbringung von sekundärer Regelleistung zur Regelung der Frequenz eines Wechselspannungsnetzes auf eine Sollfrequenz. Die sekundäre Regelleistung wird aus einem Kombinationskraftwerk umfassend einen Batteriespeicher und mindestens einem Pumpspeicherkraftwerk bereitgestellt.

Über Wechselspannungsnetze werden Verbraucher wie insbesondere Privathaushalte oder industrielle Stromverbraucher mit Stromerzeugern wie fossilen Kraftwerken, Windstromanlagen oder Solarstromanlagen verbunden. Hierbei weist das Wechselspannungsnetz eine Sollfrequenz auf, die einzuhalten ist. Zu Abweichungen von der Sollfrequenz kann es kommen, wenn das von den Stromerzeugern bereitgestellte Leistungsangebot nicht dem von den Verbrauchern abgenommenem Stromverbrauch entspricht. Um die Stabilität des Netzes über eine Stabilisierung der Frequenz des Wechselspannungsnetzes bei der Sollfrequenz zu gewährleisten, werden von den Übertragungsnetzbetreibern Regelenergieprodukte ausgeschrieben. Dies bedeutet, dass sich die Kraftwerksbetreiber verpflichten können, in einem bestimmten Rahmen Regelleistung zur Verfügung zu stellen, mit der die Frequenz des Wechselspannungsnetzes beeinflussbar ist, so dass eine Regelung der Frequenz des Wechselspannungsnetzes auf die Sollfrequenz erfolgen kann.

Zur Bereitstellung von Regelleistung kann auch ein Pumpspeicherkraftwerk eingesetzt werden. Jedoch benötigt das Anfahren von Pumpspeicherkraftwerken zur Bereitstellung sowohl von positiver als auch negativer Regelleistung Zeit. Um hier trotzdem auf Pumpspeicherkraftwerke zurückgreifen zu können, ist es bekannt, diese mit einer minimalen Last oder im hydraulischen Kurschluss zu betreiben und dann im Falle der Notwendigkeit der Bereitstellung von sekundärer Regelleistung die Leistung des Pumpspeicherkraftwerkes entsprechend zu erhöhen oder abzusenken. Insbesondere für die Vorhaltung negativer sekundärer Regelleistung wird der hydraulische Kurzschluss eingesetzt, bei dem Pumpen und Turbinen gleichzeitig laufen. Die Regelung aus den zuvor beschriebenen Betriebspunkten erfolgt zwar schneller als bei einem Anfahren von Nulllast, ist aber ineffizient, da die Turbine des Pumpspeicherkraftwerks im weniger effizienten Teillastbereich eingesetzt wird und im Fall des hydraulischen Kurschlusses noch die Wirkungsgradverluste der Pumpe hinzukommen.

Hiervon ausgehend liegt der vorliegenden Erfindung die Aufgabe zugrunde, die aus dem Stand der Technik bekannten Nachteile zumindest teilweise zu überwinden.

Die Aufgabe wird gelöst mit den Merkmalen des unabhängigen Anspruchs. Die abhängigen Ansprüche sind auf vorteilhafte Weiterbildungen gerichtet.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Nach dem erfindungsgemäßen Verfahren zum Bereitstellen von sekundärer Regelleistung zur Regelung der Frequenz eines Wechselspannungsnetzes auf eine Sollfrequenz aus einem Kombinationskraftwerk umfassend einen Batteriespeicher und mindestens ein Pumpspeicherkraftwerk, bei dem eine positive oder negative sekundäre Regelleistung angefragt wird und beim betragsmäßigen Anstieg dieser angefragten sekundären Regelleistung vom Wert null zur Bereitstellung einer sekundären Regelleistung übernimmt zunächst der Batteriespeicher eine Leistungsbereitstellung und gleichzeitig wird das Pumpspeicherkraftwerk von einer Nullleistung auf eine positive Leistung im Falle einer positiven angefragten Regelleistung und auf eine negative Leistung im Falle einer negativen angefragten sekundären Regelleistung angefahren und eine Leistungsbereitstellung durch das Pumpspeicherkraftwerk erfolgt.

Als Wechselspannungsnetz wird hier insbesondere ein Spannungsnetz verstanden, welches zur Versorgung von Verbrauchern wie insbesondere industriellen Stromverbrauchern und Privathaushalten dient. Insbesondere handelt es sich bei dem Wechselspannungsnetz um ein Energieversorgernetz mit einer oder mehreren Spannungsebenen, welches der Versorgung von Kundenanlagen mit elektrischer Energie dient, die beispielweise aus fossilen Kraftwerken, Kernkraftwerken, Laufwasserkraftwerken, Pumpspeicherkraftwerken, Fotovoltaikanlagen, Windenergieanlagen und/oder Batteriespeichern bereitgestellt wird. Das Wechselspannungsnetz wird mit einer Sollfrequenz betrieben, die beispielsweise in Westeuropa 50 Hz [Hertz] und in Nordamerika 60 Hz beträgt.

Die Frequenz des Wechselspannungsnetz weicht von der Sollfrequenz ab, wenn die in das Wechselspannungsnetz eingespeiste physikalische Leistung nicht der dem Wechselspannungsnetz entnommenen physikalischen Leistung entspricht. Um hier die Frequenz hin zur Sollfrequenz zu regeln, wird Regelleistung in das Wechselspannungsnetz abgegeben oder diesem entnommen. Liegt die Frequenz des Wechselspannungsnetzes unterhalb der Sollfrequenz so liegt eine Unterfrequenz vor, die eine Abgabe einer Regelleistung in das Wechselspannungsnetz notwendig macht. In diesem Falle ist die Regelleistung positiv. Liegt die Frequenz des Wechselspannungsnetzes oberhalb der Sollfrequenz liegt eine Überfrequenz vor, die eine Aufnahme von Leistung aus dem oder eine Reduktion der Abgabe von Leistung in das Wechselspannungsnetz erfordert. In diesem Falle ist die Regelleistung negativ.

Grundsätzlich wird heute insbesondere im kontinentaleuropäischen Verbundnetz (bei den Mitgliedern der ENTSO-E, European association for the cooperation of transmission system operators for electricity) bei der Frequenzregelung zwischen primärer Regelleistung oder Primärregelleistung (auch FCR, Frequency Containment Reserve), sekundärer Regelleistung oder Sekundärregelleistung (auch automatic Frequency Restoration Reserve, aFRR) und tertiärer Regelleistung, Tertiärregelleistung oder Minutenreserve unterschieden. Die Bereitstellung dieser Regelleistungen dient dazu, Ungleichgewichte zwischen physikalischem Leistungsangebot und physikalischer Leistungsnachfrage auszugleichen. Primärregelung und die dabei abgegebene beziehungsweise aufgenommene primäre Regelleistung einerseits und die Sekundärregelung und die abgegebene beziehungsweise aufgenommene sekundäre Regelleistung unterscheiden sich in Bezug auf die Schnelligkeit bei der Bereitstellung. So muss bei einer Frequenzabweichung von +/- 200 mHz [Millihertz] innerhalb von 30 Sekunden die primäre Regelleistung bereitstellbar, also abgebbar oder aufnehmbar, sein, während die sekundäre Regelleistung innerhalb von höchstens 5 Minuten erbringbar sein muss und eine erste Reaktion nach spätestens 30 Sekunden erfolgen muss. Die Minutenreserve dient zur Unterstützung und Entlastung der Sekundärregelleistung. Der Unterschied zwischen Primärregelung und Sekundärregelung liegt zunächst also in der Zeitskala der Bereitstellung. Darüber hinaus erfolgt die Erbringung der Primärregelleistung basierend auf der lokal gemessenen Frequenzabweichung und muss grundsätzlich zumindest für eine bestimmte Dauer erbringbar sein. Bei der sekundären Regelleistung gibt es hingegen keine zeitliche Beschränkung der Erbringung und der Vorgabewert wird zentral vom Übertragungsnetzbetreiber durch ein Regelsignal, welches im Rahmen dieses Dokuments auch als angefragte Regelleistung bezeichnet wird, zur Verfügung gestellt.

Gegenstand der vorliegenden Erfindung ist die Abgabe von positiver und negativer sekundärer Regelleistung in das Wechselspannungsnetz, also in Fällen, in denen eine Unter- oder Überfrequenz vorliegt. Nach der vorliegenden Erfindung wird bei einer Unterfrequenz die sekundäre Regelleistung zunächst nach Anforderung aus dem Batteriespeicher abgegeben, während gleichzeitig das Pumpspeicherkraftwerk angefahren wird, das heißt von einer Nulllast auf eine positive Leistung gefahren wird. Im Falle einer Unterfrequenz, also bei einer negativen angefragten sekundären Regelleistung, übernimmt beim betragsmäßigen Anstieg der angefragten sekundären Regelleistung vom Wert null zur Bereitstellung einer sekundären Regelleistung zunächst der Batteriespeicher eine Leistungsbereitstellung und gleichzeitig wird das mindestens eine Pumpspeicherkraftwerk von einer Nullleistung auf eine negative Leistung angefahren, so dass eine Leistungsbereitstellung durch das Pumpspeicherkraftwerk erfolgt. Im Falle einer nicht regelbaren Pumpe des Pumpspeicherkraftwerks ist es gegebenenfalls notwendig, zusätzlich eine Turbine anzufahren oder der Batteriespeicher muss die Abweichung zwischen der angefragten sekundären Regelleistung und der Pumpleistung ausgleichen.

Da es sich um die Bereitstellung von sekundärer Regelleistung handelt, die in einigen Wechselspannungsnetzen, wie beispielsweise dem westeuropäischen Verbundnetz, erst fünf Minuten nach Anforderung vollständig vorliegen muss, wird hier die Trägheit des Pumpspeicherkraftwerks bis zur Leistungsabgabe in Kauf genommen, da der Batteriespeicher umgehend nach Anforderung zumindest einen Teil der sekundären Regelleistung zur Verfügung stellen kann. Somit kann auf den dauerhaften Betrieb des Pumpspeicherkraftwerkes mit einer minimalen Last verzichtet werden. Die Bereitstellung von sekundärer Regelleistung erfolgt damit effizienter als aus dem Stand der Technik bekannt. Das Kriterium der Mindestreaktionszeit kann somit eingehalten werden, ohne dass das Pumpspeicherkraftwerk zuvor einen anderen Betriebspunkt als die Nulllast angefahren hat.

Bevorzugt wird ab dem Zeitpunkt, ab dem die Leistungsbereitstellung des Pumpspeicherkraftwerkes die angefragte sekundäre Regelleistung erreicht, die Leistungsbereitstellung des Batteriespeichers beendet. Somit ist es möglich, nur die eben notwendige Leistung aus dem Batteriespeicher zu entnehmen und grundsätzlich die Bereitstellung der sekundären Regelleistung über das Pumpspeicherkraftwerk abzudecken. Der Batteriespeicher steht dann für folgende, spätere, Anforderungen von sekundärer Regelleistung zur Verfügung, ohne dass eine Ladung des Batteriespeichers zwingend erforderlich ist.

Alternativ hierzu kann die sekundäre Regelleistung zunächst aus dem Batteriespeicher bereitgestellt werden, bis der Batteriespeicher fast leer ist, das heißt, bis der Ladezustand des Batteriespeicher ein vorgebbares Niveau erreicht oder unterschreitet und erst dann die Bereitstellung der sekundären Regelleistung aus dem Pumpspeicherkraftwerk vorzunehmen. Das hat den Vorteil, dass bei kürzeren Abrufen auf ein Anfahren des Pumpspeicherkraftwerks verzichtet werden kann. Auch Zwischenstrategien sind möglich: Zusätzlich zum hier beschriebenen Ladezustandstrigger kann auch ein Zeittrigger und/oder ein Leistungstrigger implementiert werden, der den Start des Pumpspeicherkraftwerks bedingt. Unter einem Zeitrigger wird hier verstanden, dass das aus dem Pumpspeicherkraftwerk Leistung zur Bereitstellung der sekundären Regelleistung bereitgestellt wird, wenn der Abruf an sekundärer Regelleistung einen eine bestimmte vorgebbare Zeitspanne überschreitet. Unter einem Leistungstrigger wird verstanden, dass dann, wenn die bereitzustellende sekundäre Regelleistung einen vorgebbaren Leistungsgrenzwert überschreitet, insbesondere, wenn die die bereitzustellende sekundäre Regelleistung die Leistung des Batteriespeichers überschreitet, Leistung aus dem Pumpspeicherkraftwerk zur Bereitstellung der sekundären Regelleistung bereitgestellt wird.

Auch ist eine zeitweise parallele Bereitstellung der sekundären Regelleistung sowohl durch das Pumpspeicherkraftwerk als auch den Batteriespeicher möglich. Beispielsweise kann im Falle der Erbringung negativer sekundärer Regelleistung durch nicht regelbare Pumpen des Pumpspeicherkraftwerks der Batteriespeicher die Abweichung zwischen der Leistung der Pumpen und angeforderter sekundärer Regelleistung ausgleichen.

Bevorzugt kann der Batteriespeicher zur Erhöhung der bereitstellbaren sekundären Regelleistung genutzt werden. In diesem Fall reicht die Pumpspeicherkraftwerksleistung nicht aus, um den Batteriespeicher vollständig abzulösen. Die Leistungsbereitstellung des Batteriespeichers endet dann, wenn der Ladezustand des Batteriespeichers null erreicht oder der Abruf vorher endet. Um die Erbringung in ersterem Fall zu ermöglichen, erfolgt die Leistungsbereitstellung der sekundären Regelleistung dann aus einem weiteren Kraftwerk, wenn der Batteriespeicher den Ladezustand null erreicht und das Pumpspeicherkraftwerk eine Leistung abgibt, die unterhalb der angefragten sekundären Regelleistung liegt oder wenn der maximale Ladezustand des Batteriespeichers erreicht ist und das Pumpspeicherkraftwerk eine Leistung abgibt, die oberhalb der angefragten sekundären Regelleistung liegt. Hierdurch kann in Situationen, in denen der Batteriespeicher nicht nur während der Anlaufphase des Pumpspeicherkraftwerkes Leistung bereitstellt, sondern über längere Zeiträume, eine Bereitstellung der sekundären Regelleistung gewährleistet werden, auch wenn der Batteriespeicher an seine Ladezustandsgrenzen (Ladezustand null oder voll geladen) stößt. Das weitere Kraftwerk verschiebt seinen Betriebspunkt dabei um einen Offset in Höhe der durch den Batteriespeicher ursprünglich vorgehaltenen Leistung nach oben (Batteriespeicher ist leer) oder nach unten (Batteriespeicher ist voll). Der Wechselprozess zum weiteren Kraftwerk startet bereits, bevor die jeweilige Ladezustandsgrenze erreicht ist, um eine durch Verzögerungen beim Wechselprozess (z.B. Anfahren des Kraftwerks) verursachte fehlende Leistungserbringung auszuschließen. Die Abweichung zwischen diesem Offset und der angefragten sekundären Regelleistung wird durch den Batteriespeicher ausgeglichen.

Der Ladezustand des Batteriespeichers kann entweder nach jedem Abruf oder bevorzugt bei Erreichen eines vorgebbaren minimalen oder maximalen Grenzwerts auf sein ursprüngliches Niveau zurückgeführt werden. Dieses ursprüngliche Niveau liegt bevorzugt bei einem Ladezustand von 100% bei Abgabe von positiver sekundärer Regelleistung und bei 0% bei Abgabe von negativer sekundärer Regelleistung. Dient der Batteriespeicher lediglich der Unterstützung des Pumpspeicherkraftwerks beim Anfahren des Pumpspeicherkraftwerks, so ist bei der Ermittlung der Grenzwerte insbesondere die Anfahrgeschwindigkeit des Pumpspeichers zu berücksichtigen, damit der Betrieb des Batteriespeichers - und damit verknüpft ein ausreichender Ladezustand - gewährleistet ist, bis das Pumpspeicherkraftwerk die Erbringung der sekundären Regelleistung übernimmt. Für den Fall, dass der Batteriespeicher über einen längeren Zeitraum zusätzliche sekundäre Regelleistung bereitstellt, sind etwaige Ladezustandsvorgaben für die Regelleistungsbereitstellung zu berücksichtigen, beispielsweise, dass der Ladezustand des Batteriespeichers für eine entsprechende Leistungsabgabe über einen vorgebbaren Zeitraum ausreicht. Diese stellen sicher, dass auch eine kontinuierliche Nachfrage nach Regelenergie bedient werden kann.

Die Regulierung des Ladezustands des Batteriespeichers kann wahlweise im Zusammenspiel mit dem Pumpspeicherkraftwerk geschehen oder im Zusammenspiel mit einem weiteren Kraftwerk, das nicht Teil des Kombinationskraftwerks ist. Für ersteren Fall wird bei einem zu geringen Ladezustand des Batteriespeichers bevorzugt die Leistungsbereitstellung des Pumpspeicherkraftwerks im Falle der Bereitstellung einer positiven sekundären Regelleistung für eine Ladezeit über die angefragte sekundäre Regelleistung hinaus erhöht und neben der Abgabe der sekundären Regelleistung durch das Pumpspeicherkraftwerk der Batteriespeicher aufgeladen. So kann der Batteriespeicher umgehend wieder aufgeladen werden. Bevorzugt endet der Ladevorgang, wenn ein vorgegebenes Niveau des Ladezustands erreicht ist oder wenn der Batteriespeicher vollständig geladen ist. Im Falle eines zu großen Ladezustands bei Abruf negativer sekundärer Regelleistung gilt dies entsprechend. Der Batteriespeicher gibt Energie ab, die vom Pumpspeicherwerk zusätzlich zur Regelleistung aufgenommen wird.

Bevorzugt wird die Leistungsbereitstellung des Batteriespeichers beendet, wenn ein Ladezustand des Batteriespeichers den Ladezustand null erreicht. Besonders bevorzugt erfolgt in diesem Zusammenhang eine Leistungsbereitstellung aus einem weiteren Kraftwerk, wenn der Batteriespeicher den Ladezustand null erreicht und das Pumpspeicherkraftwerk eine Leistung abgibt, die unterhalb der angefragten sekundären Regelleistung liegt. Hierdurch kann in Situationen, in denen der Batteriespeicher nicht nur während der Anlaufphase des Pumpspeicherkraftwerkes Leistung bereitstellt, sondern über längere Zeiträume, eine Bereitstellung der sekundären Regelleistung gewährleistet werden, auch wenn der Batteriespeicher entladen ist.

Bevorzugt wird die Leistungsbereitstellung negativer Leistung des Batteriespeichers beendet, wenn ein Ladezustand des Batteriespeichers den Ladezustand voll erreicht. Dies ermöglicht das Aufladen des Batteriespeichers durch Aufnahme von Regelleistung aus dem Wechselspannungsnetz, bis die Batterie vollständig aufgeladen ist.

Bevorzugt erfolgt in diesem Zusammenhang eine Leistungsbereitstellung aus einem weiteren Kraftwerk, wenn der Batteriespeicher den Ladezustand voll erreicht und das Pumpspeicherkraftwerk eine Leistung abgibt, die oberhalb der angefragten sekundären Regelleistung liegt. So kann mindestens ein weiteres Kraftwerk eingesetzt werden, um Leistung aus dem Wechselspannungsnetz durch Reduktion der abgegebenen Leistung aufzunehmen.

Bevorzugt wird der Batteriespeicher durch Leistung aus einem weiteren Kraftwerk geladen. Das weitere Kraftwerk ist nicht Teil des Kombinationskraftwerks. Dies ermöglicht das Aufladen des Batteriespeichers auch in Situationen, in denen die durch das Pumpspeicherkraftwerk bereitgestellte Leistung nicht zur Ladung des Batteriespeichers verwendet werden kann, beispielsweise, wenn die gesamte durch das Pumpspeicherkraftwerk bereitgestellte Leistung als sekundäre Regelleistung abgegeben wird oder das Pumpspeicherkraftwerk eigenen Speicherfüllstandsrestriktionen unterliegt.

Bevorzugt sind der Batteriespeicher über einen ersten Netzanschlusspunkt und das Pumpspeicherkraftwerk über einen zweiten Netzanschlusspunkt mit dem Wechselspannungsnetz verbunden. So können ein Batteriespeicher und ein Pumpspeicherkraftwerk zu einem Kombinationskraftwerk zusammengefasst werden, selbst wenn sie nicht am selben Ort ausgebildet sind. Alternativ sind Batteriespeicher und Pumpspeicherkraftwerk an einem gemeinsamen Netzanschlusspunkt angeschlossen. So können lokal benachbart ausgebildete Batteriespeicher und Pumpspeicherkraftwerk zu einem Kombinationskraftwerk zusammengeführt werden.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1: sehr schematisch ein Kombinationskraftwerk aus Batteriespeicher und Pumpspeicherkraftwerk;
- Fig. 2: ein erstes Beispiel einer Bereitstellung von positiver sekundärer Regelleistung, bei dem ein Batteriespeicher einen Pumpspeicher bei der Erbringung der Regelleistung unterstützt;;
- Fig. 3: ein zweites Beispiel einer Bereitstellung von positiver sekundärer Regelleistung, bei dem ein Batteriespeicher zusätzlich zu seiner unterstützenden Funktion zusätzlich Regelleistung bereitstellen kann;
- Fig. 4: ein drittes Beispiel einer Bereitstellung von negativer sekundärer Regelleistung, bei dem ein Batteriespeicher einen Pumpspeicher bei der Erbringung der Regelleistung unterstützt; und
- Fig.5: ein viertes Beispiel einer Bereitstellung von negativer sekundärer Regelleistung, bei dem ein Batteriespeicher zusätzlich zu seiner unterstützenden Funktion zusätzlich Regelleistung bereitstellen kann.

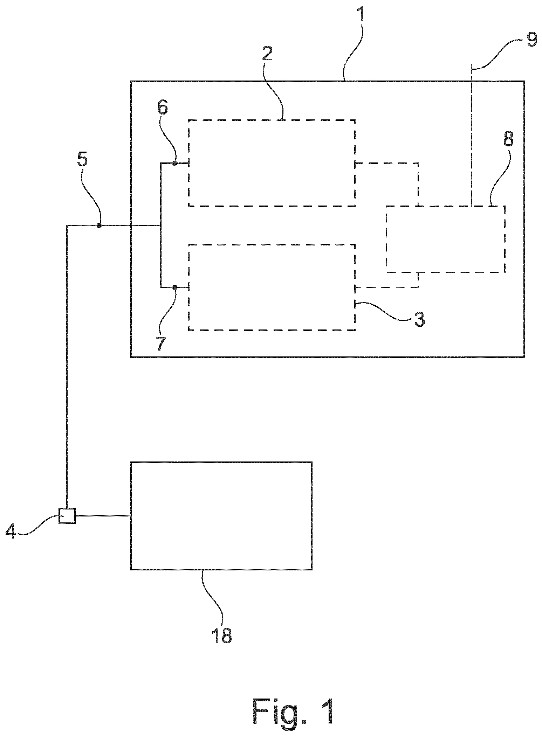

Fig. 1 zeigt sehr schematisch ein Kombinationskraftwerk 1 umfassend einen Batteriespeicher 2 und ein Pumpspeicherkraftwerk 3 zur Bereitstellung von sekundärer Regelleistung zur Regelung der Frequenz eines Wechselspannungsnetzwerks 4 auf eine Sollfrequenz. Das Kombinationskraftwerk 1 ist über einen Netzanschlusspunkt 5 mit dem Wechselspannungsnetz 4 verbunden. Alternativ kann der Batteriespeicher 2 über einen ersten Netzanschlusspunkt 6 und das Pumpspeicherkraftwerk 3 über einen zweiten Netzanschlusspunkt 7 mit dem Wechselspannungsnetz 4 verbunden sein.

Weiterhin ist eine Steuereinrichtung 8 ausgebildet, die mit dem Batteriespeicher 2 und dem Pumpspeicherkraftwerk 3 verbunden ist, um deren Leistungsbereitstellung zu regeln. Über einen Steueranschluss 9 kann die Steuereinrichtung 8 Daten austauschen, insbesondere kann über den Steueranschluss 9 eine angeforderte sekundäre Regelleistung, also eine sekundäre Soll-Regelleistung, an die Steuereinrichtung 8 übermittelt werden. Die Steuereinrichtung 8 steuert die einzelnen Komponenten des Kombinationskraftwerks 1, also insbesondere den Batteriespeicher 2 und das Pumpspeicherkraftwerk 3, an und regelt deren Leistungsbereitstellung in das Wechselspannungsnetz 4. Es ist weiterhin ein weiteres Kraftwerk 18 gezeigt, welches mit dem Wechselspannungsnetz 4 verbunden ist und welches ebenfalls Leistung in das Wechselspannungsnetz 4 einbringen kann. Das weitere Kraftwerk 18 ist dabei mindestens ein beliebiges Kraftwerk und umfasst dabei insbesondere mindestens ein fossil befeuertes Kraftwerk, mindestens ein Nuklearkraftwerk, eine oder mehrere Windkraftanlagen, eine oder mehrere Photovoltaikanlagen, mindestens ein Laufwasserkraftwerk oder mindestens ein Pumpspeicherkraftwerk.

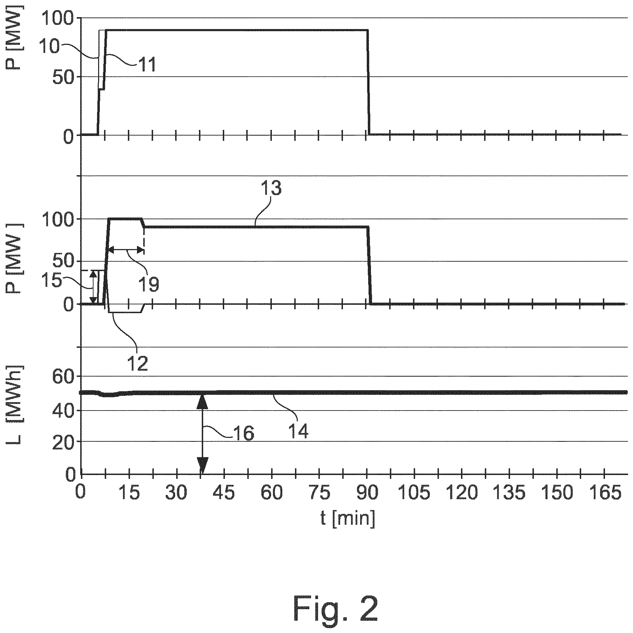

Fig. 2 zeigt schematisch ein erstes Beispiel der Bereitstellung von positiver sekundärer Regelleistung durch das Kombinationskraftwerk 1. Auf der Abszissenachse ist jeweils die Zeit t in Minuten aufgetragen. Die Fig. 2 umfasst drei übereinander liegende Darstellungen. Die obere Darstellung zeigt die Entwicklung einer angeforderten sekundären Regelleistung 10 und die durch das Kombinationskraftwerk 1 bereitgestellte sekundäre Regelleistung 11 in Megawatt [MW]. Auf der Ordinatenachse ist hier eine Leistung P in MW angegeben. Die mittlere Darstellung zeigt eine Leistungsbereitstellung 12 des Batteriespeichers 2 und eine Leistungsbereitstellung 13 des Pumpspeicherkraftwerks 3 jeweils in MW. Auf der Ordinatenachse ist hier eine Leistung P in MW angegeben. Die untere Darstellung zeigt einen Ladezustand 14 des Batteriespeichers 2 in Megawattstunden [MWh]. Auf der Ordinatenachse ist hier ein Ladezustand L in MWh aufgetragen.

Etwa bei einer Zeit von t=5 Minuten steigt die angeforderte sekundäre Regelleistung 10 von 0 MW auf 90 MW (siehe obere Darstellung). Hierauf steigt die Leistungsbereitstellung 12 des Batteriespeichers 2 umgehend von 0 MW auf die Abgabeleistung 15 von in diesem Beispiel 40 MW (vgl. mittlere Darstellung). Die bereitgestellte sekundäre Regelleistung 11 steigt analog auf 40 MW, weicht also von der angeforderten sekundären Regelleistung 10 ab (vgl. obere Darstellung). Gleichzeitig wird das Pumpspeicherkraftwerk 3 angefahren, also in Gang gesetzt. Die Leistungsbereitstellung 13 des Pumpspeicherkraftwerks 3 steigt dabei - nach einer Anfahrzeit, in der die Leistungsbereitstellung 13 weiterhin bei 0 MW liegt - von 0 MW zunächst auf einen Wert von 100 MW (vgl. mittlere Darstellung). Entsprechend wird dann die Leistungsbereitstellung 12 des Batteriespeichers 2 abgesenkt, um dann einen Wert von unter null anzunehmen. Die Leistungsbereitstellung 12 positiver Leistung durch den Batteriespeicher 2 ist damit für diese Anforderung von sekundärer Regelleistung 10 beendet. Während dieser Ladezeit 19, in der die Leistungsbereitstellung 12 des Batteriespeichers 2 negativ ist, liegt die Leistungsbereitstellung 13 des Pumpspeicherkraftwerks 3 oberhalb der angeforderten sekundären Primärregelleistung 10. Die negative Leistungsbereitstellung 12 des Batteriespeichers 2 bedeutet, dass der Batteriespeicher 2 Leistung aufnimmt und damit durch das Pumpspeicherkraftwerk 3 geladen wird. Dies zeigt auch der Ladezustand 14 des Batteriespeichers 2 (siehe untere Darstellung), der zunächst mit Beginn der Leistungsbereitstellung 12 absinkt und dann beim Beginn des Ladens des Batteriespeichers 2 für die Ladezeit 19 wieder ansteigt, bis der Batteriespeicher 2 einen vorgebbaren Ladelevel 16 von hier 50 MWh erreicht hat. Mit Erreichen des Ladelevels 16 wird die Leistungsbereitstellung 13 des Pumpspeicherkraftwerks 3 entsprechend abgesenkt (siehe mittlere Darstellung), so dass die Leistungsbereitstellung 13 des Pumpspeicherkraftwerks 3 der abgegebenen sekundären Regelleistung 11 und diese wiederum der angeforderten sekundären Regelleistung 10 entspricht (vgl. obere Darstellung).

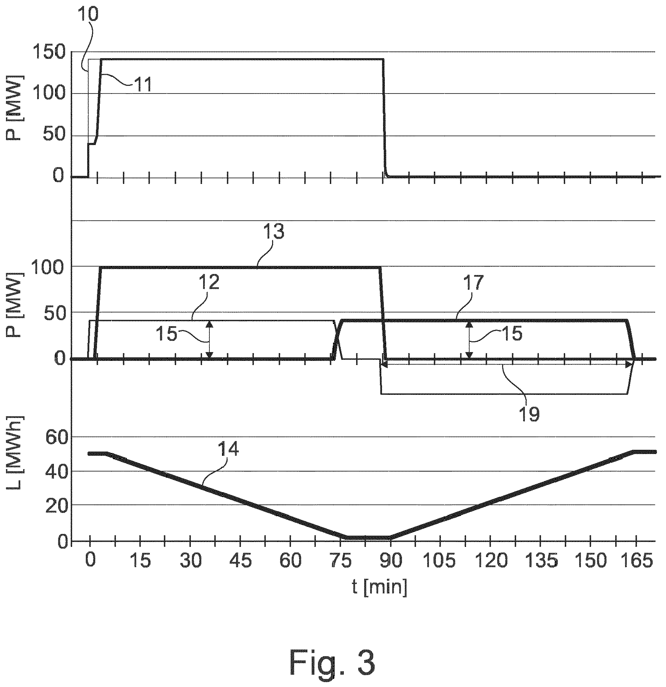

Fig. 3 zeigt ein alternatives Beispiel zur Bereitstellung von sekundärer Regelleistung 11. Um Wiederholungen zu vermeiden, sollen hier nur die Unterschiede zum ersten Beispiel (vgl. Fig. 2) beschrieben werden, ansonsten wird auf die obige Beschreibung zu Fig. 2 verwiesen. Im Unterschied zum ersten Beispiel ist der mögliche Maximalbetrag der bereitgestellten sekundären Regelleistung 11 höher als im ersten Beispiel. Im ersten Beispiel liegt dieser bei 90 MW (vgl. Fig. 2, obere Darstellung), im vorliegenden Beispiel bei 140 MW. Dies wird - bei identischer Auslegung des Kombinationskraftwerks 1 wie im ersten Beispiel - dadurch erreicht, dass die Leistungsbereitstellung 12 des Batteriespeichers 2 nicht zurückgenommen wird, wenn die Leistungsbereitstellung 13 des Pumpspeicherkraftwerks 3 den Maximalwert von 100 MW erreicht hat. In diesem Beispiel erhöht der Batteriespeicher 2 die für die Bereitstellung der sekundären Regelleistung 11 einsetzbare Leistung des Kombinationskraftwerks 1 und dient nicht der alleinigen Unterstützung des Pumpspeicherkraftwerks 3 wie im Zusammenhang mit Fig. 2 beschrieben. Vielmehr gibt der Batteriespeicher 2 so lange seine Abgabeleistung 15 von hier 40 MW ab (vgl. mittlere Darstellung der Fig. 3), bis der Ladezustand 14 des Batteriespeichers 2 einen Wert null erreicht, der Batteriespeicher 2 also vollständig entladen ist (vgl. untere Darstellung der Fig. 3). Wenn die Leistungsbereitstellung 12 des Batteriespeichers 2 (vgl. mittlere Darstellung der Fig. 3) beginnt, von der Abgabeleistung 15 aufgrund des geringen noch verbliebenen Ladezustands 14 des Batteriespeichers 2 (vgl. untere Darstellung der Fig. 3) abzufallen, steigt eine Leistungsbereitstellung 17 eines weiteren Kraftwerks 18 (vgl. Fig. 1) an und übernimmt den Anteil des Batteriespeichers 2 an der abgegebenen sekundären Regelleistung 11. Sobald die angeforderte sekundäre Regelleistung wieder auf null absinkt (in diesem Beispiel bei einer Zeit von etwa 90 Minuten), wird die Leistungsbereitstellung 13 des Pumpspeicherkraftwerks 3 reduziert, während die Leistungsbereitstellung 17 des weiteren Kraftwerks 18 zunächst unverändert bleibt und die entsprechende Leistung während einer Ladezeit 19 zum Aufladen des Batteriespeichers 2 genutzt wird (vgl. den Ladezustand 14 des Batteriespeichers 2 in der unteren Darstellung der Fig. 3).

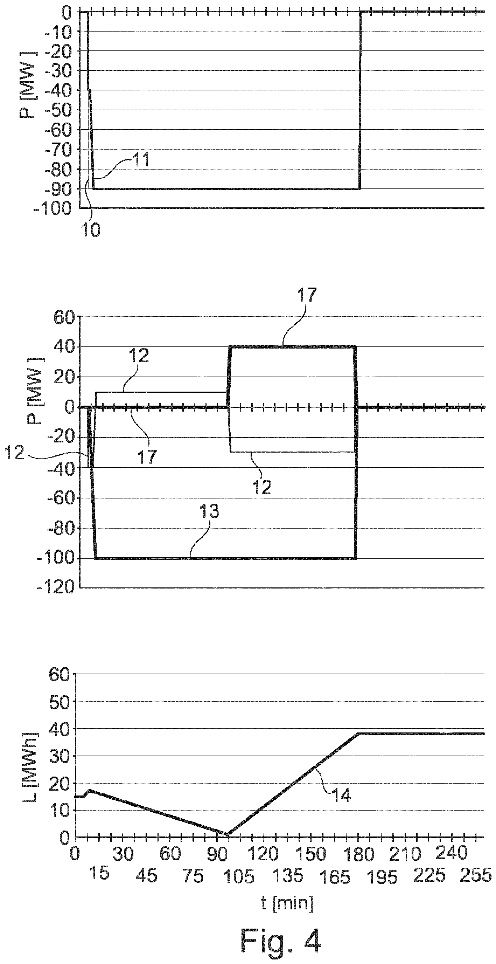

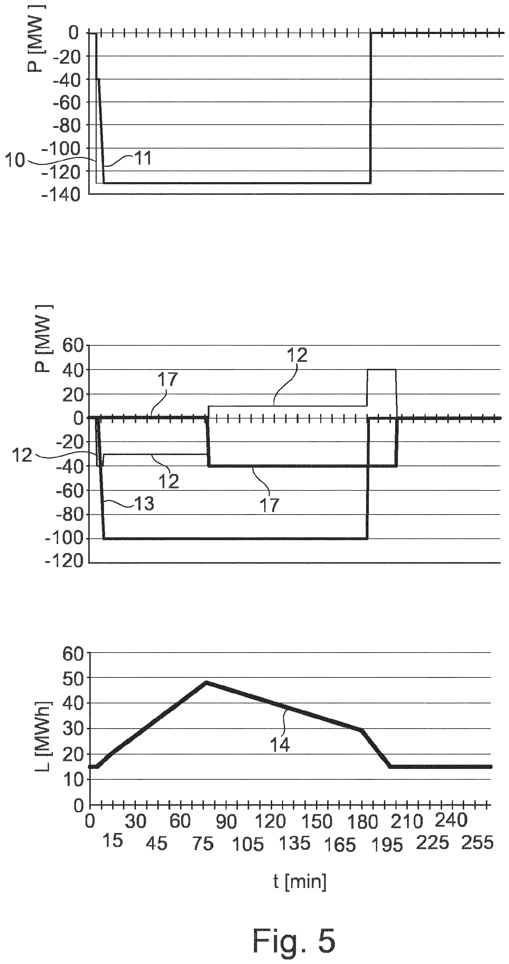

Fig. 4 und 5 zeigen zwei Beispiele einer Bereitstellung von negativer sekundärer Regelleistung, wobei Fig. 4 im wesentlichen Fig. 2 und Fig. 5 im wesentlichen Fig. 3 entspricht.

Fig. 4 zeigt schematisch ein drittes Beispiel der Bereitstellung von hier negativer sekundärer Regelleistung durch das Kombinationskraftwerk 1. Auf der Abszissenachse ist jeweils die Zeit t in Minuten aufgetragen. Fig. 4 umfasst wie Fig. 2 drei übereinander liegende Darstellungen. Die obere Darstellung zeigt die Entwicklung einer angeforderten sekundären Regelleistung 10 und die durch das Kombinationskraftwerk 1 bereitgestellte sekundäre Regelleistung 11 in MW. Auf der Ordinatenachse ist hier eine Leistung P in MW angegeben. Die mittlere Darstellung zeigt eine Leistungsbereitstellung 12 des Batteriespeichers 2, eine Leistungsbereitstellung 13 des Pumpspeicherkraftwerks 3 und eine Leistungsbereitstellung 17 eines weiteren Kraftwerks, jeweils in MW. Auf der Ordinatenachse ist hier eine Leistung P in MW angegeben. Die untere Darstellung zeigt den Ladezustand 14 des Batteriespeichers 2 in MWh. Auf der Ordinatenachse ist hier der Ladezustand L in MWh aufgetragen.

Bei einer Zeit von etwa t = 5 Minuten sinkt die angeforderte sekundäre Regelleistung 10 von 0 MW auf -90 MW (siehe obere Darstellung) und verbleibt auf diesem Niveau bis t = 180 Minuten. Da das Pumpspeicherkraftwerk 3 eine gewisse Anlaufzeit benötigt, wird zunächst negative Leistung durch den Batteriespeicher 2 bereitgestellt (siehe die Leistungsbereitstellung 12 des Batteriespeichers 2), wodurch der Batteriespeicher 2 geladen wird (vgl. Ladezustand 14 in der unteren Darstellung). Das Pumpspeicherkraftwerk 3 liefert in diesem Beispiel eine konstante negative Leistung von -100 MW, die genutzt wird, um ein Oberbecken des Pumpspeicherkraftwerks 3 aus dem Unterbecken des Pumpspeicherkraftwerks 3 zu füllen, in dem Wasser vom Unterbecken durch eine oder mehrere Pumpen in das Oberbecken gepumpt und dadurch gehoben wird. Dies ist im Falle ungeregelter Pumpen nur mit einer konstanten Leistung von in diesem Falle 100 MW möglich. Um trotzdem die angefragte sekundäre Regelleistung 10 von -90 MW bereitstellen zu können, gibt der Batteriespeicher 2 eine Leistung von 10 MW ab (vgl. die Leistungsbereitstellung 12 des Batteriespeichers 2 in der mittleren Darstellung), wodurch der Ladezustand 14 des Batteriespeichers 2 sinkt (vgl. untere Darstellung). Erreicht der Ladezustand 14 des Batteriespeichers 2 null (etwa bei einer Zeit von t = 98 Minuten (siehe untere Darstellung), wird die Leistungsbereitstellung 12 positiver Energie durch den Batteriespeicher 2 beendet (vgl. mittlere Darstellung) und ein weiteres Kraftwerk 18 wird in seiner Leistungsbereitstellung 17 so verändert, dass es für die Bereitstellung von sekundärer Regelleistung 11 Leistung bereitstellt (vgl. mittlere Darstellung). Bei dem weiteren Kraftwerk 18 kann es sich beispielsweise um ein Gas- oder Gas- und Dampfturbinenkraftwerk handeln, dessen Leistung verändert wird. Alternativ kann auch ein hydraulischer Kurzschluss im Pumpspeicherkraftwerk 3 genutzt werden, bei dem sich die Turbine des Pumpspeicherkraftwerks gemeinsam mit der Pumpe dreht.

Die Leistungsbereitstellung 17 des weiteren Kraftwerks 18 ist so bemessen, dass einerseits weiterhin die entsprechende sekundäre Regelleistung 11 bereitgestellt werden kann und andererseits, solange kein Vollabruf vorliegt der Batteriespeicher 2 geladen werden kann (vgl. mittlere und untere Darstellung der Fig. 4). Zum Zeitpunkt t=180 Minuten wird die angefragte sekundäre Regelleistung 10 auf null verändert, so dass die Leistungsbereitstellung 13, 17 des Pumpspeicherkraftwerks 3 und des weiteren Kraftwerks 18 beendet werden (vgl. mittlere Darstellung) und gleichzeitig das Laden des Batteriespeichers 2 beendet wird (vgl. untere Darstellung).

Fig. 5 zeigt ein im Vergleich zum dritten Beispiel alternatives viertes Beispiel zur Bereitstellung von sekundärer Regelleistung 11. Um Wiederholungen zu vermeiden, sollen hier nur die Unterschiede zum dritten Beispiel (vgl. Fig. 4) beschrieben werden, ansonsten wird auf die obige Beschreibung zu Fig. 4 verwiesen. Im Unterschied zum ersten Beispiel ist der mögliche Maximalbetrag der bereitgestellten sekundären Regelleistung 11 höher als im dritten Beispiel. Im dritten Beispiel liegt dieser bei -90 MW (vgl. Fig. 4, obere Darstellung), im vorliegenden Beispiel bei -140 MW. Dies wird - bei identischer Auslegung des Kombinationskraftwerks 1 wie im ersten Beispiel - dadurch erreicht, dass die Leistungsbereitstellung 12 des Batteriespeichers 2 nicht zurückgenommen wird, wenn die Leistungsbereitstellung 13 des Pumpspeicherkraftwerks 3 den Maximalwert von -100 MW durch die entsprechenden Pumpe(n) des Pumpspeicherkraftwerks 3 zur Hebung von Wasser vom Unterbecken zum Oberbecken erreicht hat. In diesem Beispiel erhöht der Batteriespeicher 2 die für die Bereitstellung der sekundären Regelleistung 11 einsetzbare Leistung des Kombinationskraftwerks 1 und dient nicht der alleinigen Unterstützung des Pumpspeicherkraftwerks 3 wie im Zusammenhang mit Fig. 4 beschrieben. Vielmehr nimmt der Batteriespeicher 2 so lange eine Leistung von -30 MW auf (vgl. mittlere Darstellung der Fig. 5), bis der Ladezustand 14 des Batteriespeichers 2 einen Grenzwert von hier 48 MWh erreicht, der Batteriespeicher 2 also beispielsweise fast vollständig oder vollständig geladen ist (vgl. untere Darstellung der Fig. 5). Zu diesem Zeitpunkt wird die Leistungsbereitstellung 12 des Batteriespeichers 2 und die Leistungsbereitstellung 17 eines weiteren Kraftwerks 18 verändert (vgl. mittlere Darstellung). Das weitere Kraftwerk 18 gibt weniger Leistung ins Wechselspannungsnetz 4 ab und weist somit eine negative Leistungsbereitstellung 17 auf, die bei -40 MW liegt. Da gemeinsam mit dem Pumpspeicherkraftwerk 2 nunmehr -140 MW an Leistung für die abgegebene sekundäre Regelleistung 11 zur Verfügung stehen, aber nur-130 MW angefragt werden (vgl. angefragte sekundäre Regelleistung 10 in der oberen Darstellung der Fig. 5) gibt nunmehr der Batteriespeicher 2 10 MW positive Leistung ins Wechselspannungsnetz 4 ab (vgl. die Leistungsbereitstellung 12 des Batteriespeichers 2 in der mittleren Darstellung der Fig. 5), so dass -130 MW an sekundärer Regelleistung 11 bereitgestellt werden. Dadurch sinkt der Ladezustand 14 des Batteriespeichers 2 entsprechend ab (vgl. die untere Darstellung in Fig. 5).

Zu einem Zeitpunkt von t = 180 Minuten endet der Abruf von sekundärer Regelleistung, die angefragte sekundäre Regelleistung 10 ändert sich von -130 MW auf null. Das Pumpspeicherkraftwerk 2 beendet die Speicherung von Energie (das Pumpen von Wasser aus dem Unterbecken ins Oberbecken, vgl. die Leistungsabgabe 13 des Pumpspeicherkraftwerks 2), der Batteriespeicher 2 gleicht die Abfahrrampe des Pumpspeicherkraftwerks 2 aus (dies ist nur symbolisch in der mittleren Darstellung der Fig. 5 angedeutet), wodurch sich der Ladezustand 14 des Batteriespeichers 2 entsprechend ändert (vgl. untere Darstellung in Fig. 5). Danach beenden der Batteriespeicher 2 und das weitere Kraftwerk 18 die Leistungsbereitstellung 12, 17 (vgl. mittlere Darstellung der Fig. 5).

Das hier vorgestellte Verfahren zur Bereitstellung von positiver beziehungsweise negativer sekundärer Regelleistung 11 zur Regelung der Frequenz eines Wechselspannungsnetzes 4 im Falle einer Unterfrequenz beziehungsweise Überfrequenz beruht auf der Bereitstellung der sekundären Regelleistung 11 zunächst über die Leistungsbereitstellung 12 eines Batteriespeichers 2 bei gleichzeitigem oder verzögertem Anfahren eines Pumpspeicherkraftwerks 3 von einer Nullleistung auf eine positive beziehungsweise negative Leistung. Für den Fall, dass der Batteriespeicher nur bei der Regelleistungserbringung unterstützt, gibt das Pumpspeicherkraftwerk 3 dabei die der Leistungsbereitstellung 13 entsprechende positive beziehungsweise negative Leistung in das Wechselspannungsnetz 4 ab.

### Bezugszeichen

- 1: Kombinationskraftwerk
- 2: Batteriespeicher
- 3: Pumpspeicherkraftwerk
- 4: Wechselspannungsnetz
- 5: Netzanschlusspunkt
- 6: erster Netzanschlusspunkt
- 7: zweiter Netzanschlusspunkt
- 8: Steuereinrichtung
- 9: Steueranschluss
- 10: angeforderte sekundäre Regelleistung
- 11: bereitgestellte sekundäre Regelleistung
- 12: Leistungsbereitstellung des Batteriespeichers
- 13: Leistungsbereitstellung des Pumpspeicherkraftwerks
- 14: Ladezustand des Batteriespeichers
- 15: Abgabeleistung
- 16: Ladelevel
- 17: Leistungsbereitstellung eines weiteren Kraftwerks
- 18: weiteres Kraftwerk
- 19: Ladezeit

- L: Ladezustand
- P: Leistung
- t: Zeit

## Patentansprüche

1. Verfahren zum Bereitstellen von sekundärer Regelleistung (11) zur Regelung der Frequenz eines Wechselspannungsnetzes (4) auf eine Sollfrequenz aus einem Kombinationskraftwerk (1) umfassend einen Batteriespeicher (2) und mindestens ein Pumpspeicherkraftwerk (3), bei dem eine positive oder negative sekundäre Regelleistung (10) angefragt wird und beim betragsmäßigen Anstieg dieser angefragten sekundären Regelleistung vom Wert null zur Bereitstellung einer sekundären Regelleistung (11) zunächst der Batteriespeicher (2) eine Leistungsbereitstellung (12) übernimmt und gleichzeitig das Pumpspeicherkraftwerk (2) im Falle einer positiven angefragten sekundären Regelleistung (10) von einer Nullleistung auf eine positive Leistung und im Falle einer negativen angefragten Regelleistung (10) auf eine negative Leistung angefahren wird und eine Leistungsbereitstellung (13) durch das Pumpspeicherkraftwerk (3) erfolgt.

2. Verfahren nach Anspruch 1, bei dem ab dem Zeitpunkt, ab dem die Leistungsbereitstellung (13) des Pumpspeicherkraftwerkes (3) die angefragte sekundäre Regelleistung (10) erreicht, die Leistungsbereitstellung (12) des Batteriespeichers (2) beendet wird.

3. Verfahren nach einem der vorhergehenden Ansprüche, bei dem die Leistungsbereitstellung (13) des Pumpspeicherkraftwerks (3) im Falle einer positiven angefragten sekundären Regelleistung (10) für eine Ladezeit (19) über die angefragte sekundäre Regelleistung (10) hinaus erhöht und neben der Abgabe der sekundären Regelleistung (11) durch das Pumpspeicherkraftwerk (3) der Batteriespeicher (2) aufgeladen wird.

4. Verfahren nach Anspruch 1 oder 2, bei dem die Leistungsbereitstellung (13) des Pumpspeicherkraftwerks (3) im Falle einer negativen angefragten sekundären Regelleistung (10) für eine Entladezeit (19) über die angefragte sekundäre Regelleistung (10) hinaus verringert und neben der Abgabe der sekundären Regelleistung (11) durch das Pumpspeicherkraftwerk (3) der Batteriespeicher (2) entladen wird.

5. Verfahren nach einem der vorhergehenden Ansprüche, bei dem die Leistungsbereitstellung (12) positiver Leistung des Batteriespeichers (2) beendet wird, wenn ein Ladezustand (14) des Batteriespeichers (2) den Ladezustand null erreicht.

6. Verfahren nach Anspruch 5, bei dem eine Leistungsbereitstellung (17) aus einem weiteren Kraftwerk (18) erfolgt, wenn der Batteriespeicher (2) den Ladezustand null erreicht und das Pumpspeicherkraftwerk (3) eine Leistung abgibt, die unterhalb der angefragten sekundären Regelleistung (10) liegt.

7. Verfahren nach einem der vorhergehenden Ansprüche, bei dem die Leistungsbereitstellung (12) negativer Leistung des Batteriespeichers (2) beendet wird, wenn ein Ladezustand (14) des Batteriespeichers (2) den Ladezustand voll erreicht.

8. Verfahren nach Anspruch 7, bei dem eine Leistungsbereitstellung (17) aus einem weiteren Kraftwerk (18) erfolgt, wenn der Batteriespeicher (2) den Ladezustand voll erreicht und das Pumpspeicherkraftwerk (3) eine Leistung abgibt, die oberhalb der angefragten sekundären Regelleistung (10) liegt.

9. Verfahren nach einem der vorhergehenden Ansprüche, bei dem der Batteriespeicher durch Leistung aus einem weiteren Kraftwerk geladen wird.

10. Verfahren nach einem der vorhergehenden Ansprüche, bei dem der Batteriespeicher (2) über einen ersten Netzanschlusspunkt (6) und das Pumpspeicherkraftwerk (3) über einen zweiten Netzanschlusspunkt (7) mit dem Wechselspannungsnetz (4) verbunden sind.

11. Verfahren nach einem der Ansprüche 1 bis 9, bei dem der Batteriespeicher (2) und das Pumpspeicherkraftwerk (3) über einen gemeinsamen Netzanschlusspunkt (5) mit dem Wechselspannungsnetz (4) verbunden sind.
